# EUROPÄISCHE PATENTSCHRIFT

(11) **EP 1 046 845 B1**
(45) Veröffentlichungstag und Bekanntmachung des Hinweises auf die Patenterteilung: **05.11.2003**
(21) Anmeldenummer: 00100765.7
(22) Anmeldetag: 15.01.2000
(51) Int. Cl.: F16K 27/02, F16K 37/00

(54) **Ventilanordnung**
Valve assembly
Ensemble de soupapes

(30) Priorität: 20.04.1999 DE 19917698
(43) Veröffentlichungstag der Anmeldung: 25.10.2000
(73) Patentinhaber: Georg Fischer Rohrleitungssysteme AG, 8200 Schaffhausen (CH)
(72) Erfinder: Miklo, JÜrgen, 8240 Thayngen (DE); Schäpper, Walter, 9470 Buchs (DE)
(74) Vertreter: Weiss, Wolfgang, Dr.

(56) Entgegenhaltungen:
- EP-A- 0 872 676
- US-A- 1 806 462
- US-A- 2 243 845
- US-A- 5 325 888
- US-A- 5 685 336
- US-A- 5 706 855

## Beschreibung

Die Erfindung bezieht sich auf eine Ventilanordnung umfassend einen Ventilkörper mit mindestens zwei Anschlussbereichen zum Anschluss an den dazupassenden Rohrleitungen und mit einem Absperrglied zum Absperren bzw. zum Oeffnen der Rohrleitung, wobei der Ventilkörper einen Durchführungsbereich zur Führung einer Spindel aufweist, die an einem ersten Ende mit dem Absperrglied und an dem zweiten Ende mit einer Betätigungsvorrichtung wirksam verbindbar angeordnet ist, wobei mindestens eine Einrichtung zum Erfassen der jeweiligen Ventilstellung vorgesehen ist, und wobei ein Aufnahmegehäuse zur Aufnahme der Einrichtungen zum Erfassen der jeweiligen Ventilstellung zumindest den Durchführungsbereich umschliesst.

Aus der EP 0 872 676 A2 ist eine gattungsgemässe Ventilanordnung mit einer elektronischen Einrichtung zum kontinuierlichen Erfassen und Steuern der Ventilstellung bekannt. Die Ventilanordnung weist zwischen Ventilkörper und Handbetätigungsrad eine Spindel auf. Die Spindel ist mittels eines Stiftes mit dem Absperrglied verbunden. Die Spindel ist am ihrem oberen Ende mit einer Buchse, die die Spindel über einen ausgedehnten Bereich umgibt, verbunden. In einem mittleren Bereich der Buchse ist ein Zahnrad mit der Buchse verbunden. Die elektronische Einrichtung weist ein weiteres Zahnrad auf, das mit dem Zahnrad der Buchse in Eingriff steht. Die Anordnung weist im Verhältnis zum Rohrleitungsdurchmesser ein relativ grosse Spindel auf und besteht aus vielen Einzelteilen, die miteinander verbunden werden müssen um die sichere Funktion zu gewährleisten.

Aus der US-A-5 325 888 ist eine Vorrichtung zur Uebertragung der Kraft eines Betätigungsorgans an einem Drehklappenventil in einer Rohrleitung bekannt. Ein Gehäuse aus Stahl oder Aluminium weist auf der unteren Seite vorstehende Befestigungsbereiche zur lösbaren Befestigung an einem Flansch der Rohrleitung auf. Das Gehäuse weist auf der oberen Seite eine Grundplatte auf, an die das Betätigungsorgan befestigt werden kann. Im Gehäuse sind eine Spindel mit Kupplungen für das Betätigungsorgan und für die Ventilspindel, ein Getriebe und einen mit dem Getriebe mechanisch gekoppelten Stellungsanzeiger angeordnet.

Bei einer Baureihe von Ventilanordnungen für unterschiedliche Durchmesser müssen sämtliche Teile, die direkt oder indirekt mit der Spindel verbunden sind, in ihrer Dimension an der Dimension und an dem Mediendurchsatz der Rohrleitung angepasst werden.

Ausgehend von diesem Stand der Technik ist es Aufgabe der Erfindung, eine Ventilanordnung anzugeben, bei der die Ventilstellung mit möglichst wenig Einzelteilen, auf möglichst direktem Wege und ohne die Gefahr von Fehlanzeigen erfasst werden kann.

Diese Aufgabe wird gelöst durch eine Ventilanordnung bestehend aus einem Ventilkörper mit mindestens zwei Anschlussbereichen zum Anschluss an den dazupassenden Rohrleitungen und mit einem Absperrglied zum Absperren bzw. zum Oeffnen der Rohrleitung, wobei der Ventilkörper einen Durchführungsbereich zur Führung einer Spindel aufweist, die an einem ersten Ende mit dem Absperrglied und an dem zweiten Ende mit einer Betätigungsvorrichtung wirksam verbindbar angeordnet ist und wobei mindestens eine Einrichtung zum Erfassen der jeweiligen Ventilstellung vorgesehen ist, wobei ein Aufnahmegehäuse zur Aufnahme der Einrichtungen zum Erfassen der jeweiligen Ventilstellung zumindest den Durchführungsbereich umschliesst und wobei im Aufnahmegehäuse eine Steuerscheibe mit Steuernocken zur Ansteuerung der Einrichtung zum Erfassen der jeweiligen Ventilstellung angeordnet ist.

Bevorzugte Weiterbildungen der Erfindung ergeben sich aus den Unteransprüchen.

Es ist von Vorteil, dass die Ventilanordnung mit der Einrichtung zum Erfassen der Ventilstellung eine möglichst kompakte und stabile Einheit bildet. Dies wird dadurch erreicht, dass das Aufnahmegehäuse den Ventilkörper im Durchführungsbereich der Spindel umschliesst und einen im wesentlichen konkav geformten Boden aufweist und mit einem Aussenwandbereich des Ventilkörpers formschlüssig verbindbar angeordnet ist.

Es ist auch von Vorteil, dass die Ventilanordnung wahlweise mit einer Handbetätigung oder mit einer Motorbetätigung eingesetzt werden kann. Dies wird dadurch erreicht, dass das Aufnahmegehäuse auf dem den Boden gegenüberliegende Seite einen Flansch zur Verbindung mit weiteren Flanschen aufweist.

Es ist auch von Vorteil, dass die Einrichtung zum Erfassen der Ventilstellung in der Ventilanordnung möglichst wenig Platz beansprucht. Dies wird auch dadurch erreicht, dass im Flansch eine mit dem Aussendurchmesser der Steuerscheibe übereinstimmende kreisbogenförmige Ausnehmung zur Aufnahme der Steuerscheibe vorgesehen ist.

Es ist auch von Vorteil, dass in der Ventilanordnung die Einrichtung zum Erfassen der Ventilstellung möglichst direkt mit den bereits vorhandenen Bestandteilen der Ventilanordnung verbunden ist. Dies wird dadurch erreicht, dass die Steuerscheibe zur Kupplung mit der Drehbewegung der Spindel oder der Betätigungsvorrichtung eine Kupplungsnase aufweist, die mit einer Nut der Spindel beziehungsweise mit einer Nut der Betätigungsvorrichtung zusammenwirkt.

Es ist weiter von Vorteil, dass die Ventilanordnung eine lange Lebensdauer hat. Dies wird dadurch erreicht, dass zwischen den Steuernocken der kreisförmigen Steuerscheibe und den Mikroschaltern konkav geformte Schaltfahnen angeordnet sind, derart dass die kreisförmige Bewegung der Steuernocken in einen geradlinigen Schaltweg der Mikroschaltern umgesetzt wird.

Die Plazierung des Aufnahmegehäuses mit der Steuerscheibe und den Einrichtungen zum Erfassen der Ventilstellung unmittelbar benachbart zu dem Bereich des Ventilkörpers, in dem die Spindel aus dem Ventilkörper heraus geführt wird, ermöglicht einerseits eine sinnvolle Ausnutzung des Platzes zwischen dem Ventilkörper und dem Betätigungsglied und andererseits eine stabile und kompakte Anordnung.

Die Ventilstellung wird nicht an dem Betätigungsglied oder an der Motorbetätigung abgefragt, sondern wird ohne dazwischen geschaltete Teile in dem Bereich erfasst, in dem die Bewegung der Spindel am ehesten mit der Bewegung des Absperrgliedes übereinstimmt. Bei einem Defekt in der Verbindung zwischen Spindel und Betätigungslied oder bei einem Bruch der Spindel im oberen Bereich, würde nicht die eigentliche Ventilstellung, sondern die Stellung des Betätigungsliedes erfasst werden. Das Aufnahmegehäuse kann ohne Aenderungen an bestehenden Ventilanordnungen hinzugefügt werden.

Ausführungsbeispiele der Erfindung werden anhand der Figuren beschrieben. Es zeigen:
Figur 1 eine perspektivische Ansicht einer Ventilanordnung mit drei Anschlussbereichen und mit Handbetätigung,
Figur 2 eine Seitenansicht einer Ventilanordnung mit zwei Anschlussbereichen und mit Motorbetätigung,
Figur 3 eine perspektivische und bereichsweise Explosionsdarstellung einer erfindungsgemässen Ventilanordnung, bei dem die Anschlussbereiche weggelassen wurden und
Figur 4 eine teilweise geschnittene perspektivische Darstellung der erfindungsgemässen Ventilanordnung in einer Phase des Zusammenbaus.

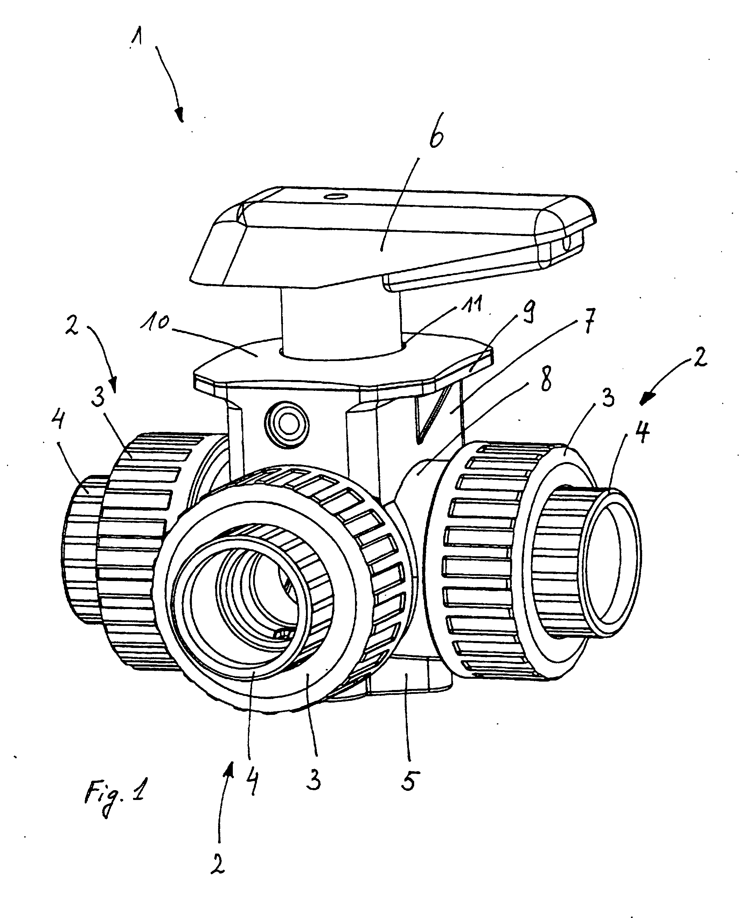

In Figur 1 ist eine Ventilanordnung 1 mit drei Anschlussbereichen 2 dargestellt. Die Anschlussbereiche 2 sind als Überwurfmutter 3 dargestellt, die mittels einen Dichtungsbereich der darin passenden Bundbuchsen 4 mit einem Ventilkörper 5 verbunden werden können. Der Ventilkörper 5 besteht im wesentlichen aus einem T-förmigen Rohr, wobei an der Kreuzungsstelle des T's im Inneren des Rohres ein (hier nicht dargestelltes) Absperrglied zum Absperren bzw. Oeffnen der anzuschliessenden Rohrleitungen vorgesehen ist. Die in Figur 1 dargestellte Ventilanordnung 1 ist aus Kunststoff hergestellt. Es sind jedoch auch andere Werkstoffe, wie Metall oder Glas, möglich. Das Absperrglied kann beispielsweise auch als Schieber oder als Drehkörper ausgeführt sein. Ebenso ist die Ausführung der Anschlussbereiche 2 mit Dichtungsbereichen und Überwurfmuttern 3 lediglich ein Beispiel für weitere mögliche Ausführungen.

Das Absperrglied im Inneren des Ventilkörpers 5 ist über eine Spindel mit einer Betätigungsvorrichtung, hier einem Handgriff 6 verbunden. Direkt oberhalb der Kreuzungsstelle des T-förmigen Ventilkörpers ist ein Aufnahmegehäuse 7 mit dem Ventilkörper 5 angeordnet. Das Aufnahmegehäuse 7 umschliesst den Bereich, in dem die Spindel aus dem Ventilkörper 5 hinausführt und weist einen Boden auf, der derart gewölbt ist, dass das Aufnahmegehäuse formschlüssig mit einem Aussenwandbereich 8 des Ventilkörpers 5 verbunden werden kann. Die Verbindung zwischen Aufnahmegehäuse 7 und Ventilkörper 5 kann mittels Verschweissen, Verschrauben oder mittels eines Klebemittels hergestellt werden.

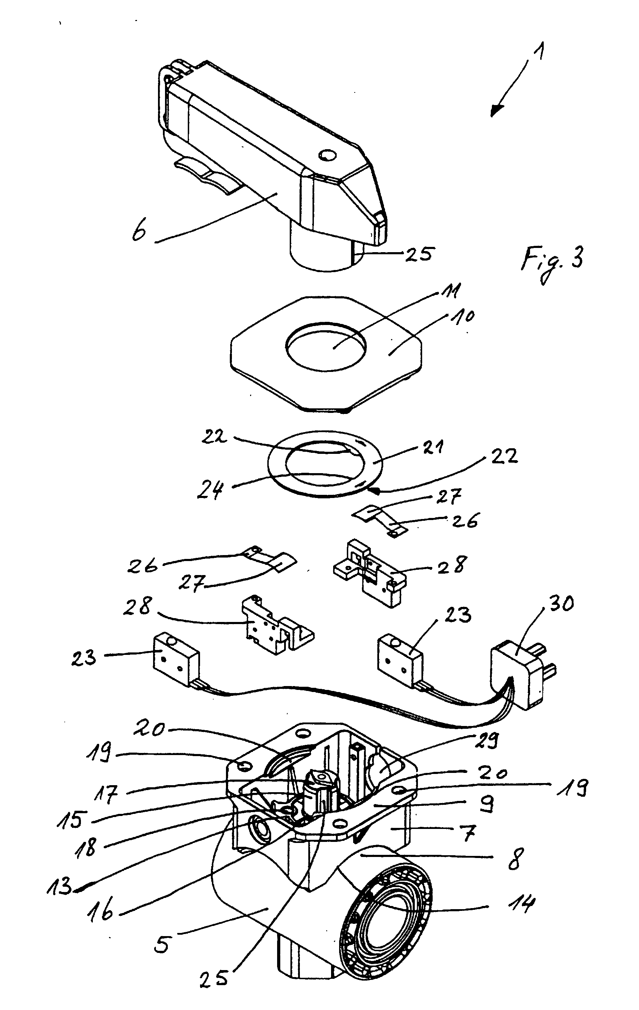

Die Spindel des Ventilkörpers 5 führt, wie in Figur 3 beschrieben wird, von einem ersten Ende, das mit dem Absperrglied im Ventilkörper 5 verbunden ist, zu einem zweiten Ende, das mit der Betätigungsvorrichtung 6 verbunden ist. Die Spindel ist vollständig oder zu einem wesentlichen Teil innerhalb des Aufnahmegehäuses 7 angeordnet.

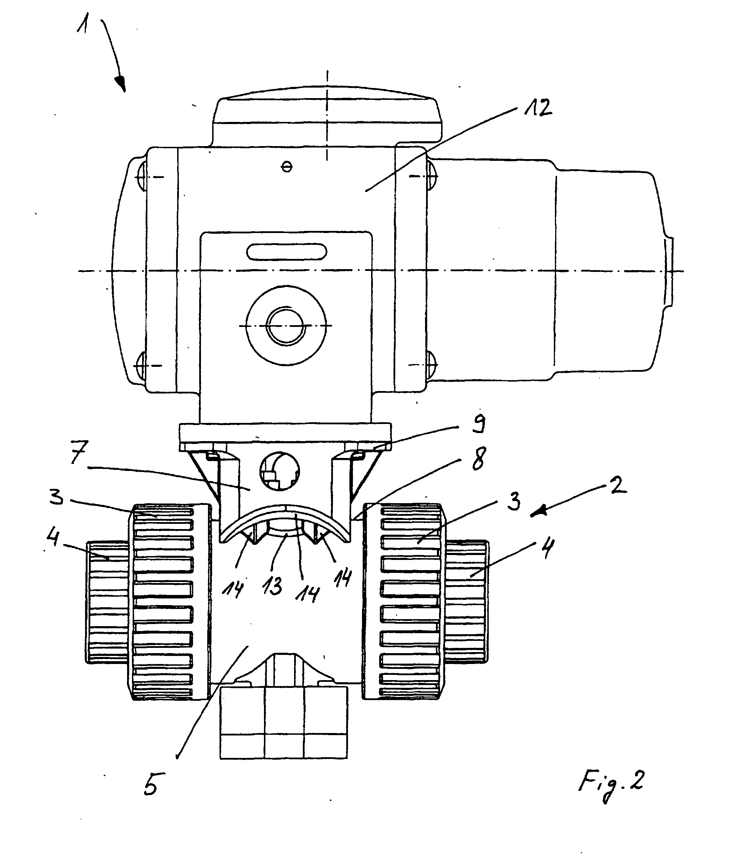

Das Aufnahmegehäuse 7 weist auf der Seite, die vom Ventilkörper entfernt und gegenüber dem gewölbten Boden angeordnet ist, einen Flansch 9 auf. Im Falle der von Hand betätigten Betätigungsvorrichtung von Figur 1, wird das Aufnahmegehäuse 7 von einer Deckplatte 10 mit einer Oeffnung 11, durch die der Handgriff 6 zur Befestigung an die Spindel hindurchgeführt wird, abgeschlossen. Mit dem Flansch 9 können jedoch, wie nachfolgend bei Figur 2 beschrieben, auch weitere Flansche verbunden werden.

In Figur 2 ist eine Ventilanordnung mit einer von einem Motor 12 betätigten Betätigungsvorrichtung dargestellt. Der Ventilkörper 5 von Figur 2 weist, im Gegensatz zu Figur 1, lediglich zwei Anschlussbereiche 2 auf. In Figur 2 ist ersichtlich, wie der Boden 13 des Aufnahmegehäuses 7 mit Wölbungen 14 ausgebildet ist. Zwei Wölbungen 14, die in Figur 2 in der Seitenansicht als keilförmige Positionierungsrippen dargestellt sind, sind in Uebereinstimmung mit der Wölbung des Aussenwandbereiches 8 des Ventilkörpers 5 ausgebildet. Eine weitere Wölbung 14, die in Figur 2 in Aufsicht dargestellt ist, ist vorgesehen für den Ventilkörper einer Dreiwegventilanordnung, wie in Figur 1 gezeigt wurde. Hiermit wird angedeutet, dass ein einzelnes Aufnahmegehäuse 7 für mehrere Ventilanordnungen 1 für den gleichen Rohrdurchmesser eingesetzt werden kann. Anstelle der Deckplatte 10 von Figur 1 wurde in der Anordnung von Figur 2 das Aufnahmegehäuse 7 mit dem Motor 12 verbunden. Durch die Ausbildung des Aufnahmegehäuses 7 mit dem Flansch 9 kann das selbe Aufnahmegehäuse 7 sowohl für Motorbetrieb als auch für Handbetrieb eingesetzt werden. Hierzu werden die Masse des Flansches 9 in Uebereinstimmung mit den bekannten Standardmassen von motorischen Betätigungsvorrichtungen festgelegt.

In Figur 3 ist die Ventilanordnung von Figur 1 vor dem Zusammenbau dargestellt. Zur besseren Uebersicht wurden beim Ventilkörper 5 die Anschlussbereiche 2 weggelassen. Das Aufnahmegehäuse 7 ist im Bereich der Wölbungen 14 formschlüssig mit dem Aussenwandbereich 8 des Ventilkörpers 5 verbunden. Im Inneren des Aufnahmegehäuses 7 ist die Spindel 15 sichtbar. Die Spindel 15 führt durch einen Durchführungsbereich 16 in dem Inneren des Ventilkörpers 5. Im Durchführungsbereich 16 sind auch die notwendigen Dichtungen zur Abdichtung des Fördermediums vorgesehen. Mit einem ersten Ende ist die Spindel 16 mit dem Absperrglied verbunden. Mit dem zweiten Ende 17 wird die Spindel mit der Betätigungsvorrichtung 6 verbunden. Das Aufnahmegehäuse 7 weist am Boden 13 auch Schraubenlöcher 18 auf. Hiermit wird angedeutet, dass das Aufnahmegehäuse 7 mittels Schrauben mit dem Ventilkörper 5 im Durchführungsbereich 16 für die Spindel 15 verbunden werden kann. Die obere Seite des Aufnahmegehäuses 7, die von dem Ventilkörper 5 abgewandt ist, ist als einen Flansch 9 ausgebildet. Der Flansch 9 weist weitere Schraubenlöcher 19 auf, die für die Befestigung der Deckplatte 10 oder des Motors 12 vorgesehen sind.

Im Flansch 9 sind zwei auf einander gegenüberliegenden Seiten des Flansches angeordnete kreisbogenförmige Ausnehmungen 20 ersichtlich. In diese Ausnehmungen 20 passt eine Steuerscheibe 21. Der Kreisbogendurchmesser der Ausnehmungen 20 stimmt im wesentlichen überein mit dem Aussendurchmesser der Steuerscheibe 21, derart, dass dieser in den Ausnehmungen 20 drehbar geführt wird. Die Steuerscheibe 21 beansprucht in den Ausnehmungen im Flansch 9 gerade nur soviel Platz, dass die Steuerscheibe bei der Drehbewegung ausreichend geführt wird. Der Flansch 9 erfährt hierdurch keine wesentliche Schwächung. Die Steuerscheibe 21 kann auch in einem tieferen Bereich der Seitenwände des Aufnahmegehäuses 7 angeordnet sein.

Die Steuerscheibe 21 ist auf der Oberseite flach, so dass dieser, einmal in die Ausnehmungen des Flansches 9 eingelegt, nicht vorsteht und beim Zusammenbau mit einem weiteren Flansch eines Motorgehäuses nicht in der Drehbewegung gehindert wird. Auf der Unterseite weist die Steuerscheibe 21 Steuernocken 22 auf. In Figur 3 sind zwei Steuernocken 22 in einem Bogenabstand von 90°, hier in Uebereinstimmung mit der Drehbewegung der Spindel eines Kugelhahnens und somit in Uebereinstimmung mit der Schwenkbewegung des Handgriffes 6, vorgesehen. Es können, je nach Bauart der Ventilanordnung 1, auch mehrere Steuernocken in unterschiedlichem Bogenabstand ausgebildet werden. Die Steuernocken 22 dienen zur Ansteuerung eine Einrichtung zum Erfassen der Ventilstellung, hier dargestellt als einen Mikroschalter 23. Die Steuerscheibe 21 kann aus einem wahlweise mit Glasfasern verstärkten Kunststoff in einem Spritzgussverfahren oder aus einer anderen Werkstoffkombination hergestellt werden.

Am Innendurchmesser der Steuerscheibe 21 ist eine Kupplungsnase 24 ausgebildet, die mit einer Nut 25 an der Spindel 15 oder mit einer Nut an der Betätigungsvorrichtung 6, die mit der Spindel 15 in diesem Bereich verbunden ist, zusammenwirkt. Durch das Zusammenwirken von Nut 25 und Kupplungsnase 24 wird die Bewegung der Spindel 15 auf die Steuerscheibe 21 übertragen.

Zwischen den Steuernocken 22 der kreisförmigen Steuerscheibe 21 und dem Mikroschalter 23 sind Schaltfahnen 26 angeordnet. Die Schaltfahnen 26 weisen einen konkav geformten Bereich 27 auf. Hiermit wird erreicht, dass die kreisförmige Bewegung der Steuerscheibe und die radiale Bewegung der Steuernocken 22 in einer geradlinigen Bewegung des Schaltstiftes des Mikroschalters 23 umgesetzt wird. Hierdurch wird verhindert, dass der Schaltstift des Mikroschalters 23 von der Seite her auf Biegung beansprucht wird. Hierdurch wird erreicht, dass die Ventilanordnung für einen längeren störungsfreien Betrieb verwendet werden kann. Die Schaltfahnen 26 können in einem Spritzgussverfahren aus Kunststoff oder in einem Stanzverfahren aus Metall hergestellt werden. Anstelle des Mikroschalters 23 kann auch einen induktiven Näherungsschalter eingesetzt werden. Hierzu müsste die Schaltfahne 26 aus einem geeigneten Material, das die Induktivität des Näherungsschalters beeinflüsst, hergestellt werden.

In Figur 3 sind auch zwei Universalhalterungen 28 dargestellt, mit der die Mikroschalter 23 an der Seitenwand des Aufnahmegehäuses 7 befestigt werden. Durch eine geeignete Formgebung dieser Universalhalterungen 28 wird erreicht, dass für unterschiedliche Ventilanordnungen jeweils die selbe Mikroschalter 23 eingesetzt werden können. Eine Universalhalterung weist auf einer Aussenwand Befestigungspunkte zur Befestigung an der Innenwand des Aufnahmegehäuses 7 und auf der Innenwand eine Vielzahl weitere Befestigungspunkte zur Befestigung der Mikroschalter oder der induktiven Näherungsschalter auf, die in der Ventilanordnung als Signalumwandler eingesetzt werden. Die Universalhalterungen 28 sind einfach herstellbare Spritzgussteile, die zur Ueberbrückung des Abstandes zwischen der Spindel 15 und der Seitenwand des Aufnahmegehäuses 7 dienen.

In einer Seitenwand des Aufnahmegehäuses 7 ist eine Durchgangsöffnung 29 vorgesehen zur Durchführung der Versorgungsleitungen bzw. Signalleitungen zu bzw. von den Einrichtungen 23 zur Erfassung der Ventilstellung von der Energieversorgung bzw. zur Signalanzeigetafel. Die Leitungen können, je nach Ausführung der Einrichtungen 23 zur Erfassung der Ventilstellung, als elektrische, hydraulische oder pneumatische Leitungen sein. Zum Anschluss dieser Leitungen ist auf der Aussenseite des Aufnahmegehäuses 7 ein Anschlussteil 30 vorgesehen. Das Anschlussteil 30 dient nicht nur als Schnittstelle für die Leitungsanschlüsse sondern gewährleistet durch die relativ grosse Dichtfläche auch eine gute Abdichtung des Aufnahmegehäuses 7.

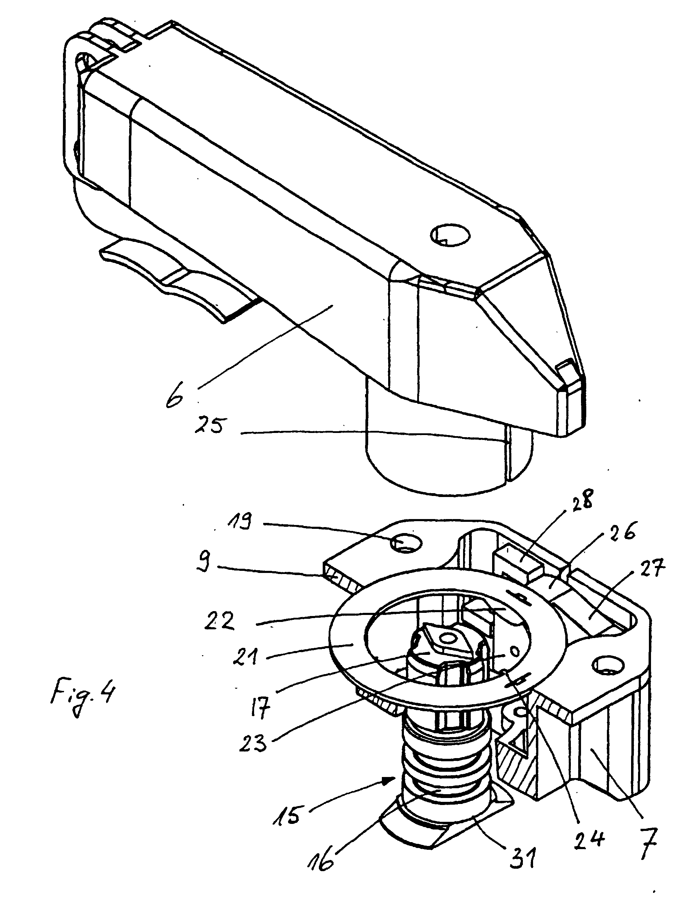

In Figur 4 ist einen Ausschnitt aus der Ventilanordnung 1 in einer Phase des Zusammenbaus dargestellt. Das Aufnahmegehäuse 7 ist, zur besseren Sicht auf die Teile im Inneren des Gehäuses, geschnitten dargestellt. Die Spindel 15 ist an dem ersten Ende 31 mit dem Absperrglied, beispielsweise ein Kugelküken, verbunden. Im Bereich des zweiten Endes 17 der Spindel ist die Steuerscheibe 21 angeordnet. Im Bereich der Seitenwand des Aufnahmegehäuses 7 ist eine Universalhalterung 28 und darin einen Mikroschalter 23 angeordnet. Der Handgriff 6 weist in dem Bereich, der mit der Spindel 15 verbunden wird, eine Nut 25 auf, die mit der Kupplungsnase 24 der Steuerscheibe 21 zusammenwirkt. Das Aufnahmegehäuse 7 mit den Mikroschaltern 23 und der Steuerscheibe 21 bildet eine kompakte Anordnung, die durch den Austausch der Universalhalterung 28 leicht an bestehenden Ventilanordnungen angepasst werden kann. Die Bauhöhe des Aufnahmegehäuses 7 entspricht in etwa die Länge der Spindel 15 und ist nicht höher als der Raum, der ohnehin vorhanden ist zwischen Ventilkörper und Betätigungsvorrichtung 6.

## Patentansprüche

1. Ventilanordnung bestehend aus einem Ventilkörper (5) mit mindestens zwei Anschlussbereichen (2) zum Anschluss an die dazupassenden Rohrleitungen und mit einem Absperrglied zum Absperren bzw. zum Oeffnen der Rohrleitungen, wobei der Ventilkörper (5) einen Durchführungsbereich (16) zur Führung einer Spindel (15) aufweist, die an einem ersten Ende mit dem Absperrglied und an dem zweiten Ende (17) mit einer Betätigungsvorrichtung (6) wirksam verbindbar angeordnet ist, wobei mindestens eine Einrichtung (23) zum Erfassen der jeweiligen Ventilstellung vorgesehen ist, und wobei ein Aufnahmegehäuse (7) zur Aufnahme der Einrichtungen zum Erfassen der jeweiligen Ventilstellung zumindest den Durchführungsbereich (16) umschliesst, **dadurch gekennzeichnet, dass** im Aufnahmegehäuse (7) eine Steuerscheibe (21) mit Steuernocken (22) zur Ansteuerung der Einrichtung (23) zum Erfassen der jeweiligen Ventilstellung angeordnet ist.

2. Ventilanordnung nach dem Anspruch 1, **dadurch gekennzeichnet, dass** das Aufnahmegehäuse (7) einen im wesentlichen konkav geformten Boden (13) aufweist und mit einem Aussenwandbereich (8) des Ventilkörpers (5) formschlüssig verbindbar angeordnet ist.

3. Ventilanordnung nach dem Anspruch 1 oder 2, **dadurch gekennzeichnet, dass** das Aufnahmegehäuse (7) auf der dem Boden (13) gegenüberliegenden Seite einen Flansch (9) zur Verbindung mit weiteren Flanschen aufweist.

4. Ventilanordnung nach einem der Ansprüche 1 bis 3, **dadurch gekennzeichnet, dass** im Flansch (9) eine mit dem Aussendurchmesser der Steuerscheibe (21) übereinstimmende kreisbogenförmige Ausnehmung (20) zur Aufnahme der Steuerscheibe (21) vorgesehen ist.

5. Ventilanordnung nach einem der Ansprüche 1 bis 4, **dadurch gekennzeichnet, dass** die Steuerscheibe (21) zur Kupplung mit der Drehbewegung der Spindel eine Kupplungsnase (24) aufweist, die mit einer Nut (25) der Spindel (6) zusammenwirkt.

6. Ventilanordnung nach einem der Ansprüche 1 bis 5, **dadurch gekennzeichnet, dass** die Steuerscheibe (21) zur Kupplung mit der Drehbewegung der Betätigungsvorrichtung eine Kupplungsnase (24) aufweist, die mit einer Nut (25) der Betätigungsvorrichtung (6) zusammenwirkt.

7. Ventilanordnung nach einem der Ansprüche 1 bis 6, **dadurch gekennzeichnet, dass** an eine Seitenwand des Aufnahmegehäuses (7) ein Anschlussteil (30) zum Anschluss der von der Einrichtung (23) zum Erfassen der Ventilstellung wegführenden pneumatischen oder hydraulischen bzw. elektrischen Signalleitungen sowie der zur Einrichtung führenden Versorgungsleitungen angeordnet ist.

8. Ventilanordnung nach einem der Ansprüche 1 bis 7, **dadurch gekennzeichnet, dass** die Einrichtungen (23) zum Erfassen der Ventilstellung als induktive Näherungsschaltern ausgebildet sind.

9. Ventilanordnung nach einem der Ansprüche 1 bis 7, **dadurch gekennzeichnet, dass** die Einrichtungen zum Erfassen der Ventilstellung als elektrische Mikroschaltern (23) ausgebildet sind.

10. Ventilanordnung nach einem der Ansprüche 1 bis 9, **dadurch gekennzeichnet, dass** zwischen den Steuemocken (22) der kreisförmigen Steuerscheibe und den Mikroschaltern (23) derart konkav geformte Schaltfahnen (26) angeordnet sind, dass die kreisförmige Bewegung der Steuernocken in einen geradlinigen Schaltweg der Mikroschaltern (23) umgesetzt wird.

11. Ventilanordnung nach einem der Ansprüche 1 bis 10, **dadurch gekennzeichnet, dass** eine Universalhalterung (28) zur Aufnahme der Einrichtung (23) zum Erfassen der Ventilstellung verbindbar mit einer Seitenwand des Aufnahmegehäuses (7)angeordnet ist.

12. Ventilanordnung nach einem der Ansprüche 1 bis 11, **dadurch gekennzeichnet, dass** das Absperrglied als ein Kugelküken ausgebildet ist.

## Claims

1. Valve arrangement comprising a valve body (5) with at least two connecting regions (2) for connection to the matching pipelines and with a shut-off element for shutting off or opening the pipelines, the valve body (5) having a lead-through region (16) for guiding a spindle (15), which is arranged such that it can be connected effectively at a first end to the shut-off member and at the second end (17) to an actuating device (6), with at least one means (23) for sensing the respective valve position being provided, and with a receiving housing (7) for receiving the means for sensing the respective valve position encloses at least the lead-through region (16), a control plate (21) with control cams (22) for activating the means (23) for sensing the respective valve position is arranged in the receiving housing (7).

2. Valve arrangement according to Claim 1, **characterized in that** the receiving housing (7) has an essentially concavely shaped base (13) and is arranged in such a way that it can be positively connected to an outer wall region (8) of the valve body (5).

3. Valve arrangement according to Claim 1 or 2, **characterized in that** the receiving housing (7) has on the side opposite the base (13) a flange (9) for connection to further flanges.

4. Valve arrangement according to one of Claims 1 to 3, **characterized in that** a recess (20) for receiving the control plate (21) is provided in the flange (9), the said recess being in the form of an arc of a circle and coinciding with the outside diameter of the control plate (21).

5. Valve arrangement according to one of Claims 1 to 4, **characterized in that** the control plate (21) has for coupling with the rotary movement of the spindle a coupling lug (24) which interacts with a groove (25) in the spindle (6).

6. Valve arrangement according to one of Claims 1 to 5, **characterized in that** the control plate (21) has for coupling with the rotary movement of the actuating device a coupling lug (24) which interacts with a groove (25) in the actuating device (6).

7. Valve arrangement according to one of Claims 1 to 6, **characterized in that** a connecting part (30) for connection of the pneumatic or hydraulic lines or electrical signal lines leading away from the means (23) for sensing the valve position and the supply lines leading to the means is arranged on a side wall of the receiving housing (7).

8. Valve arrangement according to one of Claims 1 to 7, **characterized in that** the means (23) for sensing the valve position are designed as inductive proximity switches.

9. Valve arrangement according to one of Claims 1 to 7, **characterized in that** the means for sensing the valve position are designed as electrical microswitches (23).

10. Valve arrangement according to one of Claims 1 to 9, **characterized in that** concavely shaped switching lugs (26) are arranged between the control cams (22) of the circular control plate and the microswitches (23) in such a way that the circular movement of the control cams is converted into a rectilinear switching path of the microswitches (23).

11. Valve arrangement according to one of Claims 1 to 10, **characterized in that** a universal mount (28) for receiving the means (23) for sensing the valve position is arranged such that it can be connected to a side wall of the receiving housing (7).

12. Valve arrangement according to one of Claims 1 to 11, **characterized in that** the shut-off element is designed as a ball cock.

## Revendications

1. Ensemble de soupape se composant d'un corps de soupape (5) avec au moins deux régions de raccordement (2) pour le raccordement aux conduites tubulaires adaptées à celles-ci et avec un organe de blocage pour le blocage ou pour l'ouverture des conduites tubulaires, le corps de soupape (5) présentant une région de passage (16) pour le guidage d'une broche (15) qui est disposée de manière à pouvoir être connectée activement à une première extrémité à l'organe de blocage et à la deuxième extrémité (17) à un dispositif d'actionnement (6), au moins un dispositif (23) pour détecter la position respective de la soupape étant prévu, un boîtier de réception (7) pour recevoir les dispositifs pour détecter la position respective de la soupape entourant au moins la région de passage (16), **caractérisé en ce qu'**un disque de commande (21) avec des cames de commande (22) pour la commande du dispositif (23) pour détecter la position respective de la soupape est disposé dans le boîtier de réception (7).

2. Ensemble de soupape selon la revendication 1, **caractérisé en ce que** le boîtier de réception (7) présente un fond (13) de forme essentiellement concave et est disposé de manière à pouvoir être connecté par engagement positif à une région de paroi extérieure (8) du corps de soupape (5).

3. Ensemble de soupape selon la revendication 1 ou 2, **caractérisé en ce que** le boîtier de réception (7) présente, du côté opposé au fond (13), une bride (9) pour la connexion à d'autres brides.

4. Ensemble de soupape selon l'une quelconque des revendications 1 à 3, **caractérisé en ce que** l'on prévoit dans la bride (9) un évidement (20) en forme d'arc de cercle coïncidant avec le diamètre extérieur du disque de commande (21) pour recevoir le disque de commande (21).

5. Ensemble de soupape selon l'une quelconque des revendications 1 à 4, **caractérisé en ce que** le disque de commande (21) pour l'accouplement au mouvement de rotation de la broche présente un nez d'accouplement (24) qui coopère avec une rainure (25) de la broche (6).

6. Ensemble de soupape selon l'une quelconque des revendications 1 à 5, **caractérisé en ce que** le disque de commande (21) pour l'accouplement au mouvement de rotation du dispositif d'actionnement présente un nez d'accouplement (24) qui coopère avec une rainure (25) du dispositif d'actionnement (6).

7. Ensemble de soupape selon l'une quelconque des revendications 1 à 6, **caractérisé en ce qu'**une partie de raccordement (30) est prévue pour le raccordement des conduites de signaux pneumatiques ou hydrauliques ou électriques partant du dispositif (23) pour détecter la position de la soupape ainsi que des conduites d'alimentation conduisant au dispositif.

8. Ensemble de soupape selon l'une quelconque des revendications 1 à 7, **caractérisé en ce que** les dispositifs (23) pour détecter la position de la soupape sont réalisés sous forme de commutateurs de proximité inductifs.

9. Ensemble de soupape selon l'une quelconque des revendications 1 à 7, **caractérisé en ce que** les dispositifs pour détecter la position de la soupape sont réalisés sous la forme de minirupteurs électriques (23).

10. Ensemble de soupape selon l'une quelconque des revendications 1 à 9, **caractérisé en ce qu'**entre les cames de commande (22) du disque de commande de forme circulaire et les minirupteurs (23), on prévoit des lamelles de commutation (26) de forme concave, de telle sorte que le mouvement circulaire des cames de commande soit converti en une course de commutation rectiligne des minirupteurs (23).

11. Ensemble de soupape selon l'une quelconque des revendications 1 à 10, **caractérisé en ce qu'**une fixation universelle (28) pour recevoir le dispositif (23) pour détecter la position de la soupape est disposée de manière à pouvoir être connectée à une paroi latérale du boîtier de réception (7).

12. Ensemble de soupape selon l'une quelconque des revendications 1 à 11, **caractérisé en ce que** l'organe de blocage est réalisé sous la forme d'un boisseau sphérique.
